Europäisches Patentamt

European Patent Office

Office européen des brevets

(11) Publication number: **0 400 264**
**A2**

# EUROPEAN PATENT APPLICATION

(21) Application number: **90101734.3**

(22) Date of filing: **29.01.90**

(51) Int. Cl.5: **E05B 73/00, H04M 1/66, H01R 13/60**

(30) Priority: **01.06.89 US 360157**

(43) Date of publication of application:
**05.12.90 Bulletin 90/49**

(84) Designated Contracting States:
**DE FR GB IT NL SE**

(71) Applicant: **THE BOEING COMPANY**
**7755 East Marginal Way South**
**Seattle Washington 98124(US)**

(72) Inventor: **Pinson, George T.**
**12010 Queens Place S.E.**
**Huntsville, Alabama 35803(US)**

(74) Representative: **Baillie, Iain Cameron et al**
**c/o Ladas & Parry Isartorplatz 5**
**D-8000 München 2(DE)**

(54) **Security lock for electrical equipment.**

(57) A security device for equipment requiring connection to an external source for operation and having a plug for such connection, the security device comprising a lockable enclosure for retaining the plug in the enclosure, a socket mounted within the enclosure, the socket being disposed to operatively receive the plug, an electrical connector for forming a circuit between the socket and the external source, a switch device responsive to predetermined electrical code signals for selectively completing or interrupting the circuit of the electrical connector, and an electronic signal device electrically connected to the switch device for sending the electrical code signals to selectively actuate the switch device.

EP 0 400 264 A2

## SECURITY LOCK FOR ELECTRICAL EQUIPMENT

### Field of the Invention

The present invention relates to a security lock for electrical equipment that allows power to the equipment to be controlled by an electronic key pad.

### Background of the Invention

Many attempts have been made to construct devices that prevent unauthorized use of telephones, telefaxes, reproduction equipment, and other devices dependent upon outside power sources.

Known devices for providing security to prevent unauthorized use of electrical appliances include expensive lockable coverings for the entire appliance, or a lockable switch or other device built into the appliance itself.

A number of known devices consist of a lockable box that houses at least one power outlet. A power plug from an appliance is inserted into the lock-box outlet, the appliance's power cord extends through an opening in the box, and the box is then closed and locked. The entire box is electrically connected to a source of power such as an electrical wall outlet or phone jack. In order to provide power to the appliance. a user is required to insert a special power key into a key switch located on the lock-box.

This type of device has a number of drawbacks. First, the device is designed to permit immediate accessibility. However, if the authorized user misplaces or is not carrying the power-key, access is impossible. In addition. there is a tendency at the end of a work day for authorized users to leave the power unlocked simply because it is inconvenient to power unlocked simply because it is inconvenient to locate the power key. Further, since most wall outlets are usually located near the floor, the conventional lock-boxes tend to be positioned in awkward or difficult areas to reach.

The present invention attempts to provide an improved security device for power equipment that is more convenient than the prior art devices and does not require the use of a power key.

### SUMMARY OF THE INVENTION

To achieve the foregoing, and in accordance with the purposes of the invention as embodied and broadly described herein, there is provided a security device for equipment requiring connection to an external source for operation and having a plug for such connection, the security device comprising a lockable enclosure for retaining the plug in the enclosure, a socket mounted within the enclosure. the socket being disposed to operatively receive the plug, connecting means for forming a circuit between the socket and the external source, switch means responsive to predetermined electrical code signals for selectively completing or interrupting the circuit of the connecting means; and manually operable means electrically connected to the switch means for sending the electrical code signals to selectively actuate the switch means.

### BRIEF DESCRIPTION OF THE DRAWINGS

The accompanying drawings. which are incorporated in and constitute a part of the specification, illustrate a presently preferred embodiment of the invention and, together with the general description given above and the detailed description of the preferred embodiment given below, serve to explain the principles of the invention.

Figure 1 is a schematic diagram of a security device incorporating the teachings of the present invention.

Figure 2 is a schematic diagram detailing the switching mechanism depicted in Figure 1.

Figure 3 is a further embodiment of the invention.

### DESCRIPTION OF THE PREFERRED EMBODIMENT

Reference will now be made in detail to the present preferred embodiment of the invention as illustrated in the accompanying drawings.

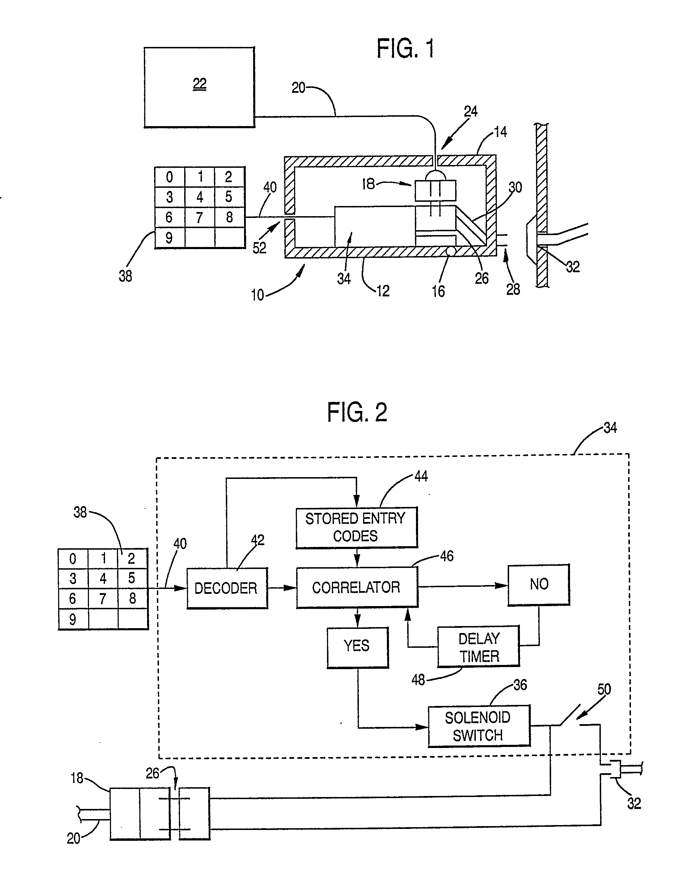

In accordance with the present invention there is provided a lockable enclosure for retaining a plug in said enclosure. As depicted in Fig. 1 lockable casing 10 includes box-shaped bottom 12 and lid 14. Hinge 16 is provided between bottom 12 and lid 14 to allow lid 14 to move between an opened and closed position. Lockable casing 10 is sized to retain conventional power plug 18. Power chord 20 connecting power equipment 22 with plug 18 extends through opening 24 between bottom 12 and lid 14. When lid 14 is opened. plug 18 may be inserted or removed from the casing 10. When lid 14 is closed as depicted in Fig. 1, plug 18 is captured within casing 10. A lock (not shown) is provided to lock lid 14 in a closed position preventing unauthorized removal of power plug 18.

In accordance with the invention there is provided a socket mounted within said enclosure, said socket being disposed to operatively receive said plug. As depicted in Fig. 1, socket 26 is mounted within casing 10 to retain plug 18. By way of example and not limitation, socket 26 may be any type of conventional socket such as a female AC socket or a phone jack.

Also in accordance with the invention, the security device includes connecting means for forming a circuit between said socket and said external source. As depicted in Fig. 1, connecting means includes male plug 28 mounted on the exterior of casing 10. Male plug 28 is electrically connected to socket 18 through wires 30 and is disposed to be inserted in conventional wall outlet 32. Alternatively, male plug 28 may be placed on the end of an extension of wires 30 to permit casing 10 to be placed in a desired location.

In accordance with the present invention the security device also includes switch means responsive to predetermined electrical code signals for selectively completing or interrupting the circuit of said connection means. As depicted in Figs. 1 and 2, switch means includes switch mechanism 34 electrically disposed between plug socket 26 and wall outlet 32. Switch mechanism 34 includes solenoid activated switch 36. Solenoid switch 36 is opened or closed by entering a desired code using key pad 38. Electric signals are transmitted via wire 40 to decoder 42. Decoder 42 decodes the electrical signals and sends them to correlator 46 which compares the entered code with codes stored in memory bank 44. If the codes are not identical, delay timer 48 either resets correlator 46 or prevents it from working for a desired time period. If the codes are identical, solenoid switch 36 is activated causing power switch 50 to close. When power switch 50 is closed power equipment 22 is electrically connected to power from outlet 32.

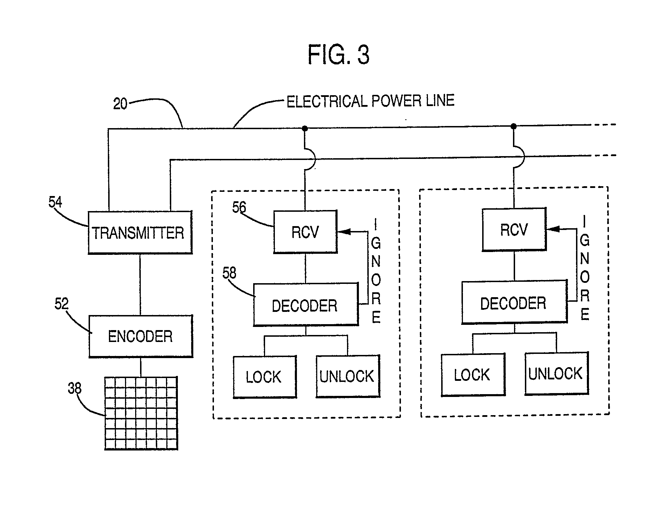

In another embodiment depicted in Fig. 3, switch means also include encoder 52, transmitter 54, and receiver 56. In this embodiment, a code entered on key pad 38 is encoded by encoder 52 and transmitted through power lines 20 by transmitter 54. Receiver 56, disposed within the power circuit of the security lock, receives the code for decoding by decoder 58. If the code received matches the code set for the lock, the state of the lock is changed. Any signal received other than the code set for the lock is ignored by the receiver.

Also in accordance with the invention, the security device is provided with manually operable means electrically connected to said switch means for sending said electrical code signals to selectively activate said switch means. In the preferred embodiment, manually operable means includes key pad 38 connected to switch mechanism 34 by wire 40, extending through opening 52 in casing 10. Key pad 38 may be directly mounted on the exterior of enclosure 10. In the event that conventional wall outlet 32 is awkwardly positioned, key pad 38 may be located at a remote and more convenient location. By way of example and not limitation, key pad 38 may be numeric or alphabetic, and may include any number of push buttons or other means for sending a code to decoder 42. Manually operable means may also include any other means for sending code signals such as a palm reader, voice print reader, or eye retina reader. In the embodiment discussed earlier in connection with Fig. 3, a single key pad, encoder, and transmitter may be used to manipulate a plurality of security locks.

In addition to use with a conventional system, the present invention may also be used in connection with a phone system. Techniques are currently available that permit an outside party to excite a telephone allowing the outside party to listen to conversation in any room where a phone is located. Use of the present invention with a telephone system not only protects against unauthorized use of the telephone, but also prevents this unauthorized eavesdropping.

Additional advantages and modifications will readily occur to those skilled in the art. The invention in its broader aspects is, therefore, not limited to the specific details, representative apparatus and illustrative examples shown and described. Accordingly, departures may be made from such details without departing from the spirit or scope of the general inventive concept as defined by the appended claims and their equivalents.

## Claims

1. A security device for equipment requiring connection to an external source for operation and having a plug for such connection, the security device comprising:
a lockable enclosure for retaining said plug in said enclosure;
a socket mounted within said enclosure, said socket being disposed to operatively receive said plug;
connecting means for forming a circuit between said socket and said external source;
switch means responsive to predetermined electrical code signals for selectively completing or interrupting the circuit of said connecting means; and
manually operable means electrically connected to said switch means for sending said electrical code signals to selectively actuate said switch means.

2. The security device as set forth in claim 1, wherein said manually operable means includes a key pad and said electrical code signals correspond to codes entered on said key pad, said security device further comprising electronic circuitry, capable of storing at least one entry code, and a correlator for comparing a code entered on said key pad to said at least one stored code.

3. A security device as set forth in claim 1, wherein said switch means includes a solenoid switch.

4. A security device as set forth in claim 2, wherein said electronic circuitry includes a delay timer for preventing said correlator from working for a desired period of time when an entered code does not correspond to a stored code.

5. A security device as set forth in claim 1, wherein said manually operable means is electrically connected to said external source for transmitting said electrical code signals to said switch means through said source.

6. A security device as set forth in claim 5, wherein said manually operable means includes an electronic key pad.

7. A security device as set forth in claim 1, wherein said source is a phone line.

8. A security device as set forth in claim 5, wherein said source is a phone line.

## FIG. 1

## FIG. 2

# FIG. 3

ELECTRICAL POWER LINE

20

54 TRANSMITTER

52 ENCODER

38

56 RCV — IGNORE

58 DECODER

LOCK    UNLOCK

RCV — IGNORE

DECODER

LOCK    UNLOCK